# EUROPÄISCHE PATENTANMELDUNG

(11) **EP 3 703 312 A1**
(43) Veröffentlichungstag der Anmeldung: **02.09.2020**
(21) Anmeldenummer: 19159450.6
(22) Anmeldetag: 26.02.2019
(51) Int. Cl.: H04L 9/32, G06F 21/44, H04L 29/06

(54) **IN EINEM ANLAGENPLANUNGSWERKZEUG INTEGRIERTES ZERTIFIKATSMANAGEMENT**

(71) Anmelder: Siemens Aktiengesellschaft, 80333 München (DE)
(72) Erfinder: Drumm, Oliver, 76344 Eggenstein-Leopoldshafen (DE); Palmin, Anna, 76187 Karlsruhe (DE)

(57) **Zusammenfassung**

Vorgeschlagen wird ein Verfahren zur Erstellung einer Topologie eines technischen Systems, insbesondere einer Fertigungs- oder Prozessanlage, mit einer Public-Key Infrastruktur mittels eines hierfür ausgebildeten Software-Werkzeugs,
bei dem eine Mehrzahl an einzelnen Komponenten (5a, 5b) zu einer Topologie des technischen Systems miteinander verknüpft wird,
wobei automatisiert aus einer Analyse von Sicherheitsanforderungen des technischen Systems abgeleitet und in dem Software-Werkzeug hinterlegt wird, welche Zertifikate die einzelnen Komponenten (5a, 5b) in einem Betrieb des technischen Systems benötigen,
und wobei bei der Verknüpfung der einzelnen Komponenten (5a, 5b) automatisiert berücksichtigt wird, welche PKI-Komponenten (2, 6) und welche Kommunikationsverbindungen zwischen den einzelnen Komponenten untereinander, von den Komponenten (5a, 5b) zu den PKI-Komponenten (2, 6) und zwischen den einzelnen PKI-Komponenten (2, 6) untereinander zum Aufbau der Public-Key Infrastruktur benötigt werden.

## Beschreibung

Die Erfindung betrifft eine Software-Datenbank für eine Public-Key Infrastruktur eines technischen Systems, insbesondere Fertigungs- oder Prozessanlage, das wenigstens eine eindeutige Kennzeichnung von in das technische System einbezogenen Komponenten umfasst, nach Anspruch 1. Außerdem betrifft die Erfindung ein Verfahren zur Erstellung einer Topologie eines technischen Systems, insbesondere einer Fertigungs- oder Prozessanlage, mit einer Public-Key Infrastruktur mittels eines hierfür ausgebildeten Software-Werkzeugs nach Anspruch 3. Zudem betrifft die Aufgabe ein Software-Werkzeug nach Anspruch 6 und ein Leitsystem nach Anspruch 7.

Die Planung einer (verfahrenstechnischen) Anlage umfasst zum aktuellen Zeitpunkt ein breites Spektrum an Gewerken, deren Engineering-Leistungen aufeinander abgestimmt werden müssen. Unterstützt wird dieser Prozess durch entsprechende Planungswerkzeuge wie das Softwarewerkzeug COMOS von SIEMENS. In Werkzeugen wie diesem entstehen ausschreibungsfähige Anlagenplanungen, die an unterschiedliche Gewerke vergeben werden.

In einem integrierten Planungsprozess werden anschließend die Planungsdaten an die nachfolgenden Planungswerkzeuge, z.B. SIMATIC PCS 7 und SIMIT von SIEMENS, elektronisch übermittelt. Dieser Prozess ist iterativ, da in dieser Phase der Anlagenplanung Änderungen üblich sind und die Daten in alle Richtungen ausgetauscht werden.

Weiterhin dient das Planungswerkzeug dazu, den aktuellen Stand der Anlage zu dokumentieren. Änderungen werden auch noch im Betrieb ins Planungswerkzeug zurückgespielt. Somit können mit dem Planungswerkzeug auch Wartungsaufgaben geplant und durchgeführt werden. Ein wichtiger Bestandteil der Anlagenplanung sind Kommunikationsverbindungen zwischen einzelnen Anlagekomponenten.

Aufgrund der Anforderungen der IEC 62443 - dem führenden Industrial Security Standard - und dem (durch die zunehmende Verwendung der offenen IT-Standards und - Protokolle) steigenden Schutzbedarf müssen die Kommunikationsverbindungen in den leittechnischen Anlagen zunehmend abgesichert d.h. gegen unberechtigten Zugriff geschützt werden.

Gemäß dem "Security by Default" als einem der Grundsätze der sogenannten "Charta of Trust" sollen die Automatisierungsgeräte gleich nach der Inbetriebnahme in einer verfahrenstechnischen Anlage sicher kommunizieren können. Das bedeutet, dass die meisten Daten von Anfang an verschlüsselt übertragen werden sollen. Außerdem sollen die Integrität und Authentizität der Daten durch adäquate Integritäts- und Authentifizierungsmechanismen geschützt werden. Derartige Mechanismen sind in der Regel ein Bestandteil sicherer Kommunikationsprotokolle (wie z.B. Transport Layer Security bzw. TLS oder Open Platform Communications Unified Architecture bzw. OPC UA).

Der Einsatz von sicheren Kommunikationsprotokollen setzt voraus, dass die Kommunikationsteilnehmer über digitale Zertifikate verfügen. Die Zertifikate, die in einer leittechnischen Anlage oder in einer anderen operativen Umgebung eingesetzt werden, um beispielsweise sichere Kommunikation oder Benutzerauthentifizierung zu ermöglichen, bezeichnet man in der Regel als operative Zertifikate (engl. Operational Certificates, OC). Mit der steigenden Anzahl der Anlagenkomponenten, die in sichere Kommunikationsbeziehungen involviert sind und diverse Zertifikate für verschiedene Zwecke benötigen, ist es sinnvoll, die operativen Zertifikate für Komponenten automatisiert auszustellen und den Komponenten zuzuweisen.

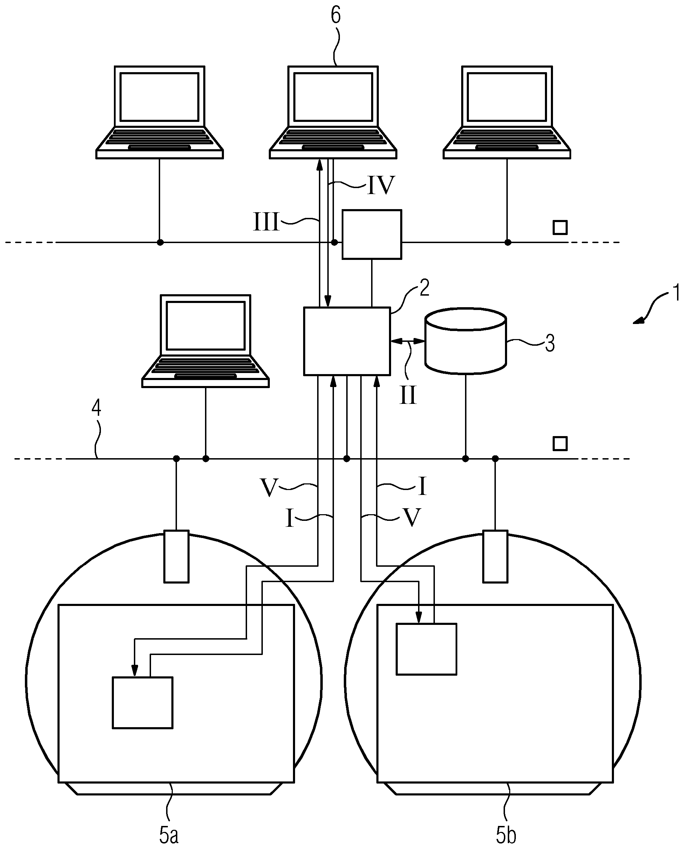

Ein derartiges automatisiertes Zertifikatsmanagement setzt eine sogenannte Public-Key Infrastruktur (PKI) voraus, die in der jeweiligen Anlage vorhanden sein soll. Eine vereinfachte Ausführungsvariante einer solchen Public-Key Infrastruktur wird anhand eines in Figur 1 dargestellten Teils eines Leitsystems 1 einer verfahrenstechnischen Anlage erläutert. Das Leitsystem 1 weist einen Registrierungsdienst 2 (engl. Registration Authority) und ein Inventar 3 auf.

Das Leitsystem 1 ist mittels eines Anlagenbusses 4 mit Geräten/Komponenten 5a, 5b einer verfahrenstechnischen Anlage verbunden. Bei den Geräten 5a, 5b kann es sich auch um Applikationen, insbesondere Webapplikation, handeln. Im Rahmen der Erfindung kann eine beliebige Zahl an Geräten und/oder Applikationen an das Leitsystem 1 angeschlossen sein. Der Anlagenbus 4 kann, ohne sich darauf zu beschränken, beispielsweise als Industrial Ethernet ausgebildet sein.

Im Rahmen des Zertifikatsmanagements stellen die beiden Geräte 5a, 5b in einem ersten Schritt I Zertifikatsanträge (engl. Certification Requests), die an die Registrierungsstelle 2 gerichtet sind. Die Registrierungsstelle 2 prüft in einem zweiten Schritt II in Rücksprache mit dem Inventar 3, ob das jeweilige Gerät 5a, 5b das Zertifikat überhaupt bekommen darf.

Im darauffolgenden dritten Schritt III leitet die Registrierungsstelle 2 die Zertifikatsanträge an eine Zertifizierungsstelle 6 (engl. Issuing Certification Authority oder kurz: CA) der verfahrenstechnischen Anlage weiter, wobei die weitergeleiteten Zertifikatsanträge mit einem Geheimschlüssel der Registrierungsstelle 2 versehen sind. Die Zertifizierungsstelle 6 prüft die Signatur auf den Zertifikatsanträgen unter Verwendung des ihr vorliegenden öffentlichen Schlüssels der Registrierungsstelle 2. Anschließend erstellt sie die angeforderten Zertifikate und leitet sie in einem vierten Schritt IV an die Registrierungsstelle 2 weiter. Die Registrierungsstelle 2 überprüft die empfangenen Zertifikate auf Gültigkeit und leitet sie dann in einem abschließenden fünften Schritt V an die Geräte 5a, 5b weiter, die die Zertifikatsanträge gestellt haben.

Ist eine leittechnische Anlage (z.B. nach dem SIMATIC PCS 7 Security Concept von SIEMENS) stark segmentiert und besteht aus mehreren autark funktionsfähigen und abgesicherten Security-Zellen, die durch Firewalls voneinander getrennt sind, ist es empfehlenswert, in jeder Security-Zelle eine sogenannte Local Registration Authority (LRA) als Registrierungsstelle zu installieren, die die Zertifikatsanträge an eine für alle Local Registration Authorities zugängliche Zertifizierungsstelle weiterleitet.

Die Vorgänge zur Beantragung der Zertifikate durch Anlagenkomponenten und zur anschließenden Auslieferung der Zertifikate an die Geräte erfordern Kommunikationsverbindungen zwischen diversen PKI-Instanzen und Anlagenkomponenten. Der Anlagenplaner legt durch die Anlagenplanung lediglich die funktionalen Kommunikationsverbindungen fest. Die zu deren Absicherung verwendete Protokolle und die zugehörigen Zertifikate werden nicht geplant. Auch die zur Ausstellung der Zertifikate benötigte Public-Key Infrastruktur wird bei der Planung nicht berücksichtigt.

Bei der Inbetriebnahme in der Kundenanlage steht der Servicetechniker dann einerseits vor der Aufgabe, zu bestimmen (bzw. zu erraten), welche Zertifikate die Anlagenkomponenten zwecks der Realisierung sicherer Kommunikationsverbindungen benötigen. Andererseits muss er die Kommunikationswege definieren und umsetzen, über die die Komponenten die Zertifikate von der PKI der Anlage beziehen sollen. Wie bereits erläutert, können die Kommunikationswege über mehrere Local Registration Authorities bzw. Registrierungsstellen zu einer oder mehreren Zertifizierungsstellen verlaufen.

Dabei stellt sich häufig heraus, dass eine von dem Planer bei der Anlagenplanung eingeplante Komponente die von dem Servicetechniker gewählte sichere Kommunikationsart und somit das dafür notwendige Zertifikat gar nicht unterstützt. Beispielsweise können aktuell nur einige ausgewählte sogenannte "Industrial Controller" die erfassten Loginformationen über sogenannte "Secure Syslog" an einen zentralen Syslog-Server oder ein zentrales SIEM-System (Security Information and Event Management) übermitteln. Dabei nutzen sie die benötigten TLS-Zertifikate. Wenn ein inkompatibler Industrial Controller (ohne Secure Syslog/ TLS) bei der Anlagenplanung eingeplant wird, kann ein Servicetechniker später keine sichere Kommunikationsverbindung zu einem zentralen Syslog-Server/ SIEM-System umsetzen. Wenn die sichere Kommunikation jedoch aus Security-Sicht notwendig ist, muss der Industrial Controller im Nachhinein durch einen passenderen Controller ersetzt werden.

Ferner erweist es sich häufig als notwendig, die vom Anlagenplaner vorgenommene Netzwerkplanung durch die Kommunikationsverbindungen zwischen den Anlagenkomponenten und den PKI-Instanzen zu erweitern. Für die rückwirkende Einarbeitung derartiger Änderungen in die ursprüngliche Anlagenplanung und die zugehörige Planungsdokumentation gibt es zum jetzigen Zeitpunkt kein adäquates Instrument. Somit entspricht die Planungsdokumentation häufig nicht der Realität und kann nicht als Basis für die Planung und Durchführung der Wartungsaufgaben eingesetzt werden.
Eine wichtige Voraussetzung für das standardgemäße Zertifikatsmanagement besteht gemäß dem zugrundeliegenden PKI-Konzept (siehe die Beschreibung oben und Figur 1) darin, dass alle Komponenten, die Zertifikate bekommen dürfen, in einem sogenannten Inventar (engl. Inventory) aufgelistet sind. Im Inventar sind Stand heute alle "legitimierten" Anlagenkomponenten hinterlegt, die ihre Originalität (in einem früheren Schritt, z.B. im Wareneingang) mit Hilfe eines sogenannten Gerätezertifikats (Manufacturer Device Certificate bzw. MDC) erfolgreich bewiesen haben.

Im Prinzip kann somit jede "legitimierte" Komponente ein beliebiges Zertifikat (u.a. ein Zertifikat mit mehreren Verwendungszwecken) über die Registrierungsstelle beantragen. Da die Registrierungsstelle lediglich prüft, ob die Komponente prinzipiell legitimiert ist, wird sie den Zertifikatsantrag für gültig erachten und an eine Zertifizierungsstelle der verfahrenstechnischen Anlage weitergeben. Dadurch wird jedoch ermöglicht, dass die Anlagenkomponenten Zertifikate bekommen können, die sie nicht benötigen bzw. gar nicht haben dürfen, was aus Security-Sicht sehr kritisch ist.

Wenn beispielsweise Benutzerzugriffe auf den Webserver eines Controllers über HTTPS nicht geplant und aus Security-Sicht sogar unbedingt zu unterbinden sind, soll der Controller kein TLS Webserver-Zertifikat bekommen (dürfen). Nutzung von Zertifikaten mit mehreren Verwendungszwecken ist aus Security-Sicht sehr kritisch. Obwohl ein solches Zertifikat rein funktional die Verwendung von mehreren sicheren Protokollen ermöglicht und als Ersatz für mehrere dedizierte Zertifikate zu verschiedenen Verwendungszwecken dient, kann es einerseits für die Nutzung von nicht erlaubten Kommunikationsverbindungen missbraucht werden.

Zudem ist zu beachten, dass, falls ein derartiges Zertifikat kompromittiert wurde (d.h. falls der Private Key dazu von einem Angreifer ermittelt wurde), alle durch das Zertifikat (genauer gesagt durch den zugehörigen kompromittierten Private Key) abgesicherten Kommunikationsverbindungen kompromittiert sind. Mit den zuvor beschriebenen Problemen ist eine Verletzung des sogenannten Minimalitätsprinzips verbunden. Dieses besagt, dass nur so viele Kommunikationsverbindungen verwendet werden dürfen, wie sie nötig und aus Security-Sicht zulässig sind.

Die Planung des Zertifikatsmanagements ist Stand heute kein Bestandteil des integrierten Engineerings einer verfahrenstechnischen Anlage. Das bedeutet insbesondere, dass die Planung der notwendigen Kommunikationsverbindungen, d.h. der Kommunikationswege, über die die Zertifikate von einer vertrauenswürdigen Zertifizierungsstelle der Anlage bezogen werden sollen, sowie die Planung der relevanten, für einzelne Komponenten benötigten Zertifikatstypen und der Zertifikatsinhalte (insb. des Verwendungszwecks) völlig unabhängig voneinander erfolgen, was in der Regel mit den zuvor erläuterten Problemen sowie mit einem hohen Zusatzaufwand verbunden ist.

Die Planung der Zertifikatsinhalte erfolgt in der Regel willkürlich und ohne jegliche Vorgaben, weil in erster Linie das schlichte Funktionieren im Vordergrund steht. Dies führt insbesondere dazu, dass die Zertifikatsinhalte pauschal definiert werden, damit ein Zertifikat für verschiedene Verwendungszwecke eingesetzt werden kann. Dies ist aus Security-Sicht jedoch zumindest nicht empfehlenswert oder sogar unzulässig.

Werden die Zertifikatsinhalte nicht pauschal geplant, kommt es in der Regel zu Fehlern. Beispielsweise wird häufig versehentlich "TLS Server Authentication" statt "TLS Client Authentication" für das Attribut "Extended Key Usage" gewählt. Ist ein solches Zertifikat ordnungsgemäß beantragt, von der Zertifizierungsstelle ausgestellt und über die Registrierungsstelle einer Komponenten mit der Rolle "Webclient" zugewiesenen, führt dies beim Einsatz des Zertifikats während eines TLS-Handshakes zu einer fehlgeschlagenen Authentifizierung, weil der Kommunikationspartner der Komponenten mit der Rolle "Webserver" ein Webclient-Zertifikat (mit dem "TLS Client Authentication" als "Extended Key Usage") erwartet.

Der Erfindung liegt die Aufgabe zugrunde, unter Einhaltung des sogenannten Minimalitätsprinzips ein fehlerrobusteres, zeiteffizienteres Zertifikatsmanagement für eine technische Anlage anzugeben.

Diese Aufgabe wird gelöst durch eine Software-Datenbank für eine Public-Key Infrastruktur eines technischen Systems, insbesondere Fertigungs- oder Prozessanlage, das wenigstens eine eindeutige Kennzeichnung von in das technische System einbezogenen Komponenten umfasst, und auf die ein Registrierungsdienst der Public-Key Infrastruktur wenigstens lesenden Zugriff hat, nach Anspruch 1. Außerdem wird die Erfindung gelöst durch ein Verfahren zur Erstellung einer Topologie eines technischen Systems, insbesondere einer Fertigungs- oder Prozessanlage, mit einer Public-Key Infrastruktur mittels eines hierfür ausgebildeten Software-Werkzeugs nach Anspruch 3. Zudem wird die Aufgabe gelöst durch ein Software-Werkzeug nach Anspruch 6 und ein Leitsystem nach Anspruch 7.

Vorteilhafte Weiterbildungen ergeben sich aus den abhängigen Ansprüchen.

Die Software-Datenbank für eine Public-Key Infrastruktur eines technischen Systems, insbesondere Fertigungs- oder Prozessanlage, das wenigstens eine eindeutige Kennzeichnung von in das technische System einbezogenen Komponenten umfasst, ist erfindungsgemäß dadurch gekennzeichnet, dass in der Software-Datenbank für wenigstens eine Komponente, bezüglich derer eine eindeutige Kennzeichnung in dem Software-Inventar hinterlegt ist, Informationen darüber hinterlegt sind, ob der Komponente Zertifikate zugewiesen werden dürfen.

Unter einem technischen System wird vorliegend eine Mehrzahl an Maschinen, Geräten, Applikationen oder dergleichen verstanden, die in einem funktionalen und oftmals auch räumlichen Zusammenhang zueinanderstehen. Mittels des technischen Systems können beispielsweise in (groß-)technischen Dimensionen Produkte, Komponenten und dergleichen erzeugt bzw. gefertigt werden. Bei dem technischen System kann es sich beispielsweise aber auch um ein Automobil, ein Schiff, ein Flugzeug oder dergleichen handeln. Bei dem technischen System kann es sich beispielsweise um eine Anlage aus der Prozessindustrie wie beispielsweise eine chemische, pharmazeutische, petrochemische oder eine Anlage aus der Nahrungs- und Genussmittelindustrie handeln. Von dem Begriff "technisches System" sind aber auch jegliche Anlagen aus der Produktionsindustrie umfasst, Werke, in denen z.B. Autos oder Güter aller Art produziert werden. Auch aus dem Bereich der Energieerzeugung wie Windräder, Solaranlagen oder Kraftwerke zur Energieerzeugung können solche technischen Systeme stammen.

Mit dem Begriff "Public-Key Infrastruktur" (kurz: PKI) wird eine Sicherheitsinfrastruktur für ein technisches System verbunden, die Services für einen sicheren Austausch von Daten zwischen Kommunikationspartnern des technischen Systems bereitstellt. Mithilfe der Public-Key Infrastruktur lassen sich beispielsweise Zertifikate ausstellen, verteilen und prüfen.

Unter einem Zertifikat wird ein digitaler Datensatz verstanden, der bestimmte Eigenschaften (in diesem Fall von Maschinen, Geräten, Applikationen und dergleichen) bestätigt. Eine Authentizität und Integrität des Zertifikats kann mittels kryptografischer Verfahren verifiziert werden.

Bei der eindeutigen Kennzeichnung kann es sich beispielsweise um eine Seriennummer einer Anlagenkomponente handeln. Eine solche Anlagenkomponente kann beispielsweise ein Feldgerät, eine Steuerungsvorrichtung, eine Applikation oder dergleichen sein.

Die erfindungsgemäße Software-Datenbank enthält wenigstens eine Information darüber, ob einer bestimmten Komponente des technischen Systems Zertifikate (überhaupt) zugewiesen werden dürfen (oder nicht). Auch wenn es der betreffenden Komponente unerlaubterweise gelingt, eine Zertifikatsanfrage an den Registrierungsdienst der Public-Key Infrastruktur zu stellen, stellt die in der Software-Datenbank hinterlegte Information über die Berechtigungen der einzelnen Komponenten eine zusätzliche Absicherungsstufe für die Public-Key Infrastruktur des technischen Systems dar.

Um die Absicherung noch weiter zu erhöhen, können in der Software-Datenbank für wenigstens eine Komponente Informationen darüber hinterlegt sein, welche Zertifikate einer jeweiligen Komponente gegebenenfalls zugewiesen werden dürfen. Mit anderen Worten ist in der Software-Datenbank nicht nur eine "Whitelist" hinterlegt, die angibt, welche Komponenten überhaupt Zertifikate beziehen dürfen, sondern auch eine Auflistung an Zertifikaten, die die "berechtigten" Komponenten beziehen dürfen. Wenn eine Komponente demnach die erste Hürde der prinzipiellen Bezugsberechtigung übersprungen hat, stößt sie auf eine zweite Sicherheitsüberprüfung, die Berechtigungen der jeweiligen Komponente in Abhängigkeit einer Art eines zu beziehenden Zertifikats abfragt.

Durch die zentrale Ablage der zu beziehenden Zertifikate für die jeweiligen Komponenten in der Software-Datenbank können neben der Vereinfachung des Zertifikatsmanagements eine höhere Transparenz sowie eine bessere Auditierbarkeit und Rückverfolgbarkeit des technischen Systems erreicht werden.

Die zuvor ausgeführte Aufgabe wird zudem durch ein Verfahren zur Erstellung einer Topologie eines technischen Systems, insbesondere einer Fertigungs- oder Prozessanlage, mit einer Public-Key Infrastruktur mittels eines hierfür ausgebildeten Software-Werkzeugs gelöst. Im Rahmen dieses Verfahrens wird eine Mehrzahl an einzelnen Komponenten zu einer Topologie des technischen Systems miteinander verknüpft. In einem Schritt des Verfahrens werden aus einer Analyse von Sicherheitsanforderungen des technischen Systems Informationen abgeleitet und in dem Software-Werkzeug hinterlegt. Diese Informationen beinhalten eine Aussage darüber, welche Zertifikate die einzelnen Komponenten in einem Betrieb des technischen Systems benötigen. Dabei wird bei der Verknüpfung der einzelnen Komponenten automatisiert berücksichtigt, welche PKI-Komponenten und welche Kommunikationsverbindungen zwischen den einzelnen Komponenten untereinander, von den Komponenten zu den PKI-Komponenten und zwischen den einzelnen PKI-Komponenten untereinander zum Aufbau der Public-Key Infrastruktur benötigt werden.

Unter einer Topologie werden strukturelle und funktionelle Zusammenhänge zwischen einzelnen Komponenten des technischen Systems verstanden. Im Bereich der Prozessanlagen kann beispielsweise das Software-Werkzeug COMOS von SIEMENS für die Erstellung einer Topologie der Prozessanlage verwendet werden. Man spricht in diesem Zusammenhang auch von einer Anlagenplanung. Es handelt sich dabei um eine zunächst abstrakte Planung eines Zusammenwirkens der verschiedenen Komponenten, ohne dass eine konkrete, physische Realisierung der einzelnen Komponenten hierfür notwendig wäre. Die resultierende Topologie kann generell zum Aufbau der konkreten Anlage verwendet werden. Alternativ oder zusätzlich können die Ergebnisse auch im Rahmen einer Simulationsumgebung für eine Simulation der Anlage eingesetzt werden, ohne dass diese tatsächlich hierfür physisch vorhanden sein müsste.

Im Rahmen des erfindungsgemäßen Verfahrens werden zunächst Sicherheitsanforderungen für das technische System bzw. dessen einzelne Komponenten automatisiert mittels des Software-Werkzeugs durchgeführt. Bei diesen Sicherheitsanforderungen kann es sich um verbindliche Security-Anforderungen sowie Ergebnisse von entsprechenden Security-Assessments und einer sogenannten "Threat and Risk" Analyse handeln.

Das Software-Werkzeug leitet aus dieser Analyse ab, welche Zertifikate die einzelnen Komponenten benötigen. Die Zertifikatsanträge der Komponenten werden also bereits im Software-Werkzeug "vorgedacht". Die einzelnen Komponenten, beispielsweise ein Netzwerkswitch, der Zertifikatsanträge für TLS-Clients, TLS-Server oder OPC UA-Server stellen muss, bekommen nur die Zertifikatsanträge zugewiesen, die für die Nutzung der sicheren Kommunikationsprotokolle bzw. Applikationen, die die Komponenten zur Ausübung der ihnen im Kontext des technischen Systems vonnöten sind.

Durch diesen Schritt wird die Einhaltung des Minimalitätsprinzips der IT-Sicherheit sichergestellt, weil die sicheren Kommunikationsprotokolle und die zugehörigen Zertifikatstypen nur für die Komponenten eingeplant werden, die sie aus Security-Sicht auch tatsächlich benötigen. Für die Komponenten, die keine Zertifikate benötigen, wird im Einklang mit dem Minimalitätsprinzip keine Anbindung an die Instanzen der Public-Key Infrastruktur geplant. Diese bedeutet, dass auch im Fall eines unberechtigten Versuchs, ein Zertifikat zu beantragen, eine solche Komponente die keine Verbindung zu der Public-Key Infrastruktur des technischen Systems herstellen kann, weil in dem Software-Werkzeug eine solche Verbindung nicht vorgesehen ist. Außerdem wird der Verwendungszweck jedes geplanten Zertifikats stark eingeschränkt bzw. auf die dedizierte Aufgabe der jeweiligen Komponente genau zugeschnitten.

Die Informationen, welche Zertifikate eine bestimmte Komponente beantragen darf, wird in dem Software-Werkzeug zum Beispiel in Form einer Konfigurationsdatei hinterlegt. Dabei muss das Software-Werkzeug die Konfigurations-Datei nicht bei jedem Durchlauf des Verfahrens komplett neu erstellen, sondern kann auch prüfen, ob sich Änderungen gegenüber vorherigen Versionen der Konfigurations-Datei ergeben haben und dann nur die notwendigen Änderungen vornehmen.

Aus Security-Gründen ist es aufgrund des Minimalitätsprinzips empfehlenswert, ein dediziertes operatives Zertifikat pro verwendetes Kommunikationsprotokoll zu nutzen. Um den benötigten Zertifikatstyp möglichst strikt einzugrenzen, kann zusätzlich zum eigentlichen Zweck der Schlüsselverwendung (was als Attribut "Key Usage" in der Konfigurations-Datei hinterlegt werden kann) berücksichtigt werden, welche Rolle (z.B. Server oder Client) eine Komponente im Kontext einer bestimmten Kommunikationsbeziehung spielt.

Falls eine Komponente beispielsweise OPC UA zur Absicherung einer Kommunikationsbeziehung nutzt, dabei die Server-Rolle übernimmt und TLS zur Absicherung einer anderen Kommunikationsbeziehung nutzt, wobei er dabei die Client-Rolle besitzt, benötigt die Komponente ein OPC UA-Server-Zertifikat und ein TLS-Zertifikat für die TLS-Client Authentifizierung. Diese Information kann in dem entsprechenden Zertifikatsantrag und in dem darauf basierend ausgestellten Zertifikat unter dem Attribut "Extended Key Usage" aufgeführt werden. Beide Informationen werden in der Konfigurations-Datei für die betreffende Komponente in dem Software-Werkzeug hinterlegt.

Dabei kann das Attribut "Key Usage" beispielsweise je nach Verwendungszweck einen der folgenden Werte annehmen:
- Datenverschlüsselung (engl. Data Encipherment)
- Verschlüsselung eines Schlüssels (eng. Key Encipherment)
- Schlüsselvereinbarung (engl. Key Agreement)
- Digitale Signatur (engl. Digital Signature)

Die weitere Konkretisierung des Verwendungszwecks wird dann durch das Attribut "Extended Key Usage" realisiert. Dieses Attribut kann beispielsweise folgende Werte annehmen:
- TLS Server Authentication
- TLS Client Authentication
- OPC-UA Server Authentication
- Digitale Unterschrift (engl. Digital Signature)

Im Rahmen des erfindungsgemäßen Verfahrens wird zudem von dem Software-Werkzeug automatisiert berücksichtigt, welche PKI-Komponenten und welche Kommunikationsverbindungen zwischen den einzelnen Komponenten untereinander, von den Komponenten zu den PKI-Komponenten und zwischen den einzelnen PKI-Komponenten untereinander zum Aufbau der Public-Key Infrastruktur benötigt werden.

Man benötigt für den Aufbau einer Public-Key Infrastruktur in an sich bekannter Weise wenigstens eine Registrierungsstelle (engl. Registration Authority bzw. RA), eine Zertifizierungsstelle (engl. Certification Authority bzw. CA) und eine Software-Datenbank. Zusätzlich können weitere PKI-Komponenten wie lokale Registrierungsstellen (engl. Local Registration Authorities bzw. LRA) in der Public-Key Infrastruktur enthalten sein. Unter einer Registrierungsstelle des technischen Systems wird eine funktionelle Instanz verstanden, die Registrierungsanfragen wie Zertifikatsanträge von Komponenten des technischen Systems entgegennimmt, diese prüft und im Erfolgsfall insbesondere an eine Zertifizierungsstelle des technischen Systems weiterleitet.

Das Software-Werkzeug erstellt zudem automatisiert die notwendigen Kommunikationsverbindungen zwischen den (normalen) Komponenten des technischen Systems und den (speziellen) PKI-Komponenten. So können beispielsweise bestimmte Komponenten des technischen Systems automatisch einzelnen RAs bzw. LRAs zugeordnet werden. Dazu wird ausgehend von jeder Komponente, die sich als Bedarfsträger für bestimmte Zertifikatstypen erwiesen hat, das verbundene Kommunikationsnetz bestimmt. Da das gesamte Systemnetz einen Graphen bildet, können zur Bestimmung der Kommunikationswege zwischen den Komponenten bekannte Algorithmen aus der Graphentheorie verwendet werden (z.B. Breadth-First Search oder Depth-First Search). Wenn mittels graphentheoretischer Untersuchungen die Kommunikationswege bekannt sind, lässt sich daraus automatisch ermitteln, welche Partner sich prinzipiell über welche Kommunikationsprotokolle austauschen können.

Bevor die erstellte Topologie für weitere Zwecke (konkrete Umsetzung des technischen Systems und/oder Simulationen) verwendet wird, kann der Benutzer vorteilhafterweise Änderungen bzw. Modifizierungen an der Topologie innerhalb des Software-Werkzeugs vornehmen.

Mittels des erfindungsgemäßen Verfahrens kann bewirkt werden, dass eine bestimmte Komponente eines technischen Systems, die bestimmte Zertifikate gar nicht benötigt, diese nicht benötigten Zertifikate auch nicht bekommen (und ggf. missbrauchen) kann. Dadurch wird ein fundierter Beitrag zur Einhaltung des (u.a. von der NAMUR geforderten) Minimalitätsprinzips geleistet. Zudem wird ein Beitrag zur Eliminierung von Fehlern und zur Verringerung des Zeitaufwandes bei der Zuweisung einzelner Zertifikate bzw. Zertifikatstypen zu den einzelnen Komponenten geleistet.

Im Rahmen einer vorteilhaften Weiterbildung des Verfahrens wird mittels des Software-Werkzeugs geprüft, ob die einzelnen Komponenten für eine Verwendung der jeweils benötigten Zertifikate ausgebildet sind. Dabei ersetzt das Software-Werkzeug für den Fall, dass eine Komponente nicht für eine Verwendung eines benötigten Zertifikats ausgebildet ist, entweder die betreffende Komponente in der Topologie automatisch durch eine geeignet ausgebildete Komponente in der Topologie oder unterbreitet einem Nutzer des Software-Werkzeugs einen Vorschlag über eine solche Ersetzung.

Bevorzugt überträgt das Software-Werkzeug Informationen darüber, welche Zertifikate die einzelnen Komponenten in einem Betrieb des technischen Systems benötigen, an eine Software-Datenbank eines Leitsystems des technischen Systems.

Unter einem Leitsystem wird im vorliegenden Kontext ein computergestütztes, technisches System verstanden, das Funktionalitäten zum Darstellen, Bedienen und Leiten beispielsweise einer technischen Fertigungs- oder Produktionsanlage umfasst. Das Leitsystem umfasst in diesem Fall Sensoren zur Ermittlung von Messwerten sowie verschiedene Aktoren. Zudem umfasst das Leitsystem sogenannte prozess- oder fertigungsnahe Komponenten, die zur Ansteuerung der Aktoren bzw. Sensoren dienen. Darüber hinaus weist das Leitsystem u.a. Mittel zur Visualisierung der technischen Anlage und zu einem Engineering auf. Unter dem Begriff Leitsystem sind zusätzlich auch weitere Recheneinheiten für komplexere Regelungen und Systeme zur Datenspeicherung und -verarbeitung zu fassen. Vorliegend weist das Leitsystem eine Software-Datenbank zum Hinterlegen von Informationen bezüglich der von einzelnen Komponenten benötigten Zertifikaten auf.

Ein aus dieser Weiterbildung des Verfahrens erwachsender Vorteil besteht darin, dass die Absicherung des technischen Systems bzw. der Public-Key Infrastruktur noch weiter erhöht werden kann. Wenn eine Komponente demnach die erste Hürde der prinzipiellen Bezugsberechtigung übersprungen hat, stößt sie auf eine zweite Sicherheitsüberprüfung, die Berechtigungen der jeweiligen Komponente in Abhängigkeit einer Art eines zu beziehenden Zertifikats abfragt.

Die zuvor erläuterte Aufgabe wird zudem durch ein Software-Werkzeug gelöst, das zur Durchführung eines Verfahrens wie zuvor erläutert ausgebildet ist.

Auch wird die Aufgabe durch ein Leitsystem zur Steuerung eines technischen Systems, insbesondere einer Prozess- oder Fertigungsanlage, gelöst. Das Leitsystem umfasst dabei wenigstens ein Software-Werkzeug und eine Software-Datenbank, die wie zuvor erläutert ausgebildet sind.

Obwohl die Erfindung im Detail durch bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Software-Datenbank (3) für eine Public-Key Infrastruktur eines technischen Systems, insbesondere Fertigungs- oder Prozessanlage, das wenigstens eine eindeutige Kennzeichnung von in das technische System einbezogenen Komponenten (5a, 5b) umfasst, und auf die ein Registrierungsdienst der Public-Key Infrastruktur wenigstens lesenden Zugriff hat,
**dadurch gekennzeichnet, dass**
in der Software-Datenbank (3) für wenigstens eine Komponente (5a, 5b), bezüglich derer eine eindeutige Kennzeichnung in der Software-Datenbank (3) hinterlegt ist, Informationen darüber hinterlegt sind, ob der Komponente (5a, 5b) Zertifikate zugewiesen werden dürfen.

2. Software-Datenbank (3) nach Anspruch 1, in der für wenigstens eine Komponente (5a, 5b) Informationen darüber hinterlegt sind, welche Zertifikate der Komponente (5a, 5b) gegebenenfalls zugewiesen werden dürfen.

3. Verfahren zur Erstellung einer Topologie eines technischen Systems, insbesondere einer Fertigungs- oder Prozessanlage, mit einer Public-Key Infrastruktur mittels eines hierfür ausgebildeten Software-Werkzeugs,
bei dem eine Mehrzahl an einzelnen Komponenten (5a, 5b) zu einer Topologie des technischen Systems miteinander verknüpft wird,
wobei automatisiert aus einer Analyse von Sicherheitsanforderungen des technischen Systems abgeleitet und in dem Software-Werkzeug hinterlegt wird, welche Zertifikate die einzelnen Komponenten (5a, 5b) in einem Betrieb des technischen Systems benötigen,
und wobei bei der Verknüpfung der einzelnen Komponenten (5a, 5b) automatisiert berücksichtigt wird, welche PKI-Komponenten (2, 6) und welche Kommunikationsverbindungen zwischen den einzelnen Komponenten untereinander, von den Komponenten (5a, 5b) zu den PKI-Komponenten (2, 6) und zwischen den einzelnen PKI-Komponenten (2, 6) untereinander zum Aufbau der Public-Key Infrastruktur benötigt werden.

4. Verfahren nach Anspruch 3, bei dem im Rahmen des Schrittes a mittels des Software-Werkzeugs geprüft wird, ob die einzelnen Komponenten (5a, 5b) für eine Verwendung der jeweils benötigten Zertifikate ausgebildet sind, wobei das Software-Werkzeug für den Fall, dass eine Komponente (5a, 5b) nicht für eine Verwendung eines benötigten Zertifikats ausgebildet ist, entweder die betreffende Komponente (5a, 5b) automatisch durch eine geeignet ausgebildete Komponente (5a, 5b) in der Topologie ersetzt oder einem Nutzer des Software-Werkzeugs einen Vorschlag über eine solche Ersetzung unterbreitet.

5. Verfahren nach Anspruch 3 oder 4, bei dem das Software-Werkzeug die Informationen darüber, welche Zertifikate die einzelnen Komponenten (5a, 5b) in einem Betrieb des technischen Systems benötigen, an eine Software-Datenbank (3) eines Leitsystems (1) des technischen Systems übertragen.

6. Software-Werkzeug zur Durchführung eines Verfahrens gemäß einem der Ansprüche 3 bis 5.

7. Leitsystem (1) zur Steuerung eines technischen Systems, insbesondere einer Prozess- oder Fertigungsanlage, das ein Software-Werkzeug gemäß Anspruch 6 und eine Software-Datenbank (3) gemäß Anspruch 1 oder 2 aufweist.
